# EUROPÄISCHE PATENTSCHRIFT

(11) **EP 0 398 252 B1**
(45) Veröffentlichungstag und Bekanntmachung des Hinweises auf die Patenterteilung: **19.10.1994**
(21) Anmeldenummer: 90109132.2
(22) Anmeldetag: 15.05.1990
(51) Int. Cl.: F23C 3/00, F16L 11/18, F16L 37/24

(54) **Mantelstrahlheizrohr**
Radiant tube with jacket
Tube radiant avec enveloppe

(30) Priorität: 18.05.1989 DE 3915957
(43) Veröffentlichungstag der Anmeldung: 22.11.1990
(73) Patentinhaber: LBE BEHEIZUNGSEINRICHTUNGEN GMBH, D-42389 Wuppertal (DE)
(72) Erfinder: Dittmann, Hans Joachim, Dipl.-Ing., D-5830 Schwelm (DE)

(56) Entgegenhaltungen:
- EP-A- 0 197 546
- EP-A- 0 296 031
- DE-A- 2 050 868
- DE-A- 3 447 603

## Beschreibung

Die Erfindung betrifft ein Mantelstrahlheizrohr mit einem Mantelrohr und einem in diesem angeordneten Flammrohr, welches mindestens zwei Rohrabschnitte aufweist, die an ihrem einen Ende als Muffenende und an ihrem anderen Ende als Einsteckende ausgebildet sind, wobei der eine Rohrabschnitt mit seinem Einsteckende in das Muffenende des benachbarten Rohrabschnitts eingesteckt ist.

Bei einem bekannten Mantelstrahlheizrohr dieser Art (DE-A 34 47 603) ist die Anordnung so getroffen, daß sich die Rohrabschnitte in Richtung des geschlossenen Endes des Mantelrohrs gegen den jeweils benachbarten Rohrabschnitt abstützen und in Gegenrichtung, also in Richtung auf den Brenner, einzeln frei herausziehbar sind. Dies führt zu Montageschwierigkeiten, weil das Flammrohr Stück für Stück in das Mantelrohr eingesetzt und aus ihm entnommen werden muß. Daraus ergeben sich auch entsprechende wartungstechnische Schwierigkeiten. Hinzu kommt, daß bei hängender Anordnung des Mantelstrahlheizrohres das Gewicht des gesamten Flammrohres auf das geschlossene Ende des Mantelrohrs drückt. Das Mantelrohr ist also zusätzlich zu den ohnehin vorhandenen thermischen Beanspruchungen erheblichen mechanischen Belastungen ausgesetzt und wird entsprechend gedehnt.

Der Erfindung liegt die Aufgabe zugrunde, ein Mantelstrahlheizrohr der eingangs genannten Art zu schaffen, welches unabhängig von einer Einbaulage ist und dessen Flammrohr einfach und wartungsfreundlich zu montieren ist.

Zur Lösung dieser Aufgabe ist das Mantelstrahlheizrohr nach der Erfindung dadurch gekennzeichnet, daß die Rohrabschnitte bajonettverschlußartig miteinander verriegelt sind, wobei das Muffenende mindestens zwei im wesentlichen sphärisch gekrümmte Innenflächenabschnitte mit in Umfangsrichtung dazwischenliegenden, bis zum Rand verlaufenden radialen Erweiterungen und das Einsteckende mindestens zwei im wesentlichen sphärisch gekrümmte Außenflächenabschnitte mit in Umfangsrichtung dazwischenliegenden, bis zum Rand verlaufenden radialen Verengungen aufweist und wobei die sphärisch gekrümmten Außenflächenabschnitte des Einsteckendes komplementär zu den sphärisch gekrümmten Innenflächenabschnitten des Muffenendes sind und durch dessen Erweiterung im benachbarten Rohrabschnitt axial hindurchpassen.

Das Flammrohr bildet also eine in Axialrichtung verbundene Einheit, die als geschlossene Baugruppe in das Mantelrohr einsetzbar und aus letzterem herausziehbar ist. Dies erleichtert nicht nur die Montage, sondern vereinfacht auch Wartungsarbeiten. Bei hängender Anordnung wird das Gewicht des Flammrohres vom Brenner bzw. von dessen Halterung aufgenommen. Das empfindliche und thermisch hochbelastete Mantelrohr wird also von zusätzlichen mechanischen Belastungen freigehalten.

Das Muffenende weist mindestens einen nach innen vorspringenden Innenflächenabschnitt auf, der von einem nach außen vorspringenden Außenflächenabschnitt des Einsteckendes des benachbarten Rohrabschnitts hintergriffen ist. Trotz der Möglichkeit des axialen Einsteckens und der Drehverriegelung, wie sie der Bajonettverschluß mit sich bringt, behalten Muffenende und Einsteckende ihre durchgehende rohrförmige Struktur bei, so daß an den Verbindungsstellen der einzelnen Rohrabschnitte lediglich Axialspalten bestehen, die keine wesentliche Verbindung zwischen dem Inneren des Flammrohrs und dem außen vom Mantelrohr umgebenen Ringraum schaffen.

Vorzugsweise ermöglicht die bajonettverschlußartige Verriegelung einen axialen Winkelversatz der Rohrabschnitte. Dieses Merkmal ist besonders dann von Bedeutung, wenn das Mantelstrahlheizrohr horizontal montiert werden soll. Dabei kann es nämlich im Betrieb dazu kommen, daß das Mantelrohr aufgrund der thermischen Belastungen durchhängt. Diesem Durchhang können sich die Rohrabschnitte anpassen, indem sie gegenseitig verkippen. Gleiches gilt, wenn bei schräger oder vertikaler Anbringung Krümmungen auszugleichen sind.

Die Konstruktion bildet in montiertem Zustand eine Art axial verriegeltes Kugelgelenk, welches die axialen Kräfte überträgt und dabei ein Verkippen der Rohrabschnitte nicht behindert. Von besonderer Bedeutung ist, daß sich die erfindungsgemäße Gestaltung hervorragend für eine Fertigung der Rohrabschnitte aus Keramik eignet. Die Rohrabschnitte lassen sich ohne weiteres schlickern und bedürfen keiner Nachbearbeitung.

Das Flammrohr kann, wie auch das Mantelrohr, grundsätzlich aus beliebigem Material, beispielsweise aus hitzebeständigem Stahl bestehen. Allerdings entfaltet die Erfindung ihre Vorteile besonders dann, wenn die Rohrabschnitte aus Keramik, insbesondere aus dünnwandigem Siliziumkarbid bestehen.

Vorzugsweise sind die Innen- und Außenflächenabschnitte symmetrisch über dem jeweiligen Umfang verteilt.

Nach einem weiteren Merkmal der Erfindung ist das Mantelstrahlheizrohr gekennzeichnet durch mindestens einen im Muffenende nach innen vorspringenden Anschlag, der einen zugehörigen, nach innen vorspringenden Innenflächenabschnitt in Umfangsrichtung einseitig begrenzt. Dadurch wird sichergestellt, daß der Bajonettverschluß immer ausreichend verdreht wird. Grundsätzlich genügt ein Anschlag, jedoch kann auch jedem der nach innen vorspringenden Innenflächenabschnitte, seien es deren zwei oder mehrere, ein gesonderter Anschlag zugeordnet werden.

Nach einem weiteren vorteilhaften Merkmal weisen die Rohrabschnitte jeweils mindestens zwei äußere radiale Ansätze zum Zentrieren im Mantelrohr auf. Die Zentrierung erfolgt also direkt über die Rohrabschnitte und bedarf keiner zusätzlichen Ringe o.dgl.. Bei keramischen Rohrabschnitten werden die radialen Ansätze einstückig mit den Rohrabschnitten ausgebildet, beispielsweise geschlickert.

Die Erfindung wird im folgenden anhand eines bevorzugten Ausführungsbeispiels im Zusammenhang mit der beiliegenden Zeichnung näher erläutert. Die Zeichnung zeigt in:
- Fig. 1: einen erfindungsgemäßen Rohrabschnitt, und zwar im oberen Teil im Axialschnitt;
- Fig. 2: eine Stirnansicht des Rohrabschnittes, und zwar gesehen von links in Fig. 1;
- Fig. 3: einen Schnitt entlang der Linie A-A in Fig. 1;
- Fig. 4: eine Stirnansicht des Rohrabschnittes, und zwar gesehen von rechts in Fig. 1;
- Fig. 5: einen Schnitt entlang der Linie B-B in Fig. 1; und
- Fig. 6: zwei ineinandergesteckte Rohrabschnitte, und zwar in einer Darstellung entsprechend der nach Fig. 1.

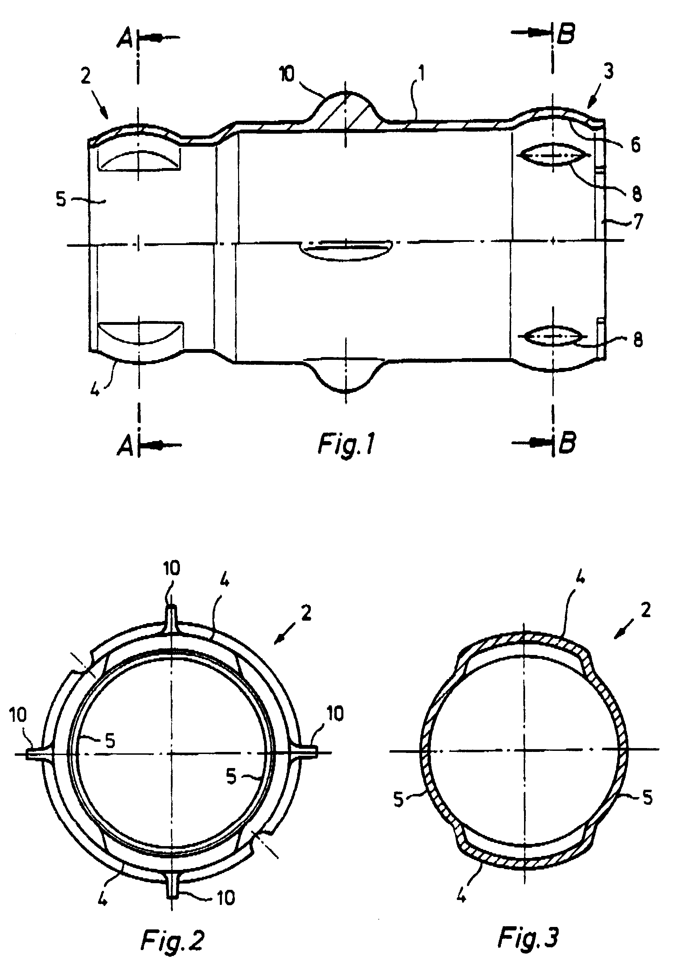

Figur 1 zeigt einen Rohrabschnitt 1, der ein Einsteckende 2 und ein Muffenende 3 aufweist. Eine Mehrzahl derartige Rohrab schnitte ist zu einem Flammrohr eines Mantelstrahlheizrohrs zusammensetzbar, wobei jeweils ein Einsteckende in ein Muffenende eines benachbarten Rohrabschnitts eingeschoben und dort zur bajonettverschlußartigen Verriegelung verdreht wird. Die Rohrabschnitte bestehen aus Siliziumkarbid und sind geschlickert.

Nach den Figuren 2 und 3 weist das Einsteckende 2 zwei symmetrisch angeordnete sphärisch gekrümmte Außenflächenabschnitte 4 auf, die über bis zum Rand verlaufende Verengungen 5 miteinander verbunden sind.

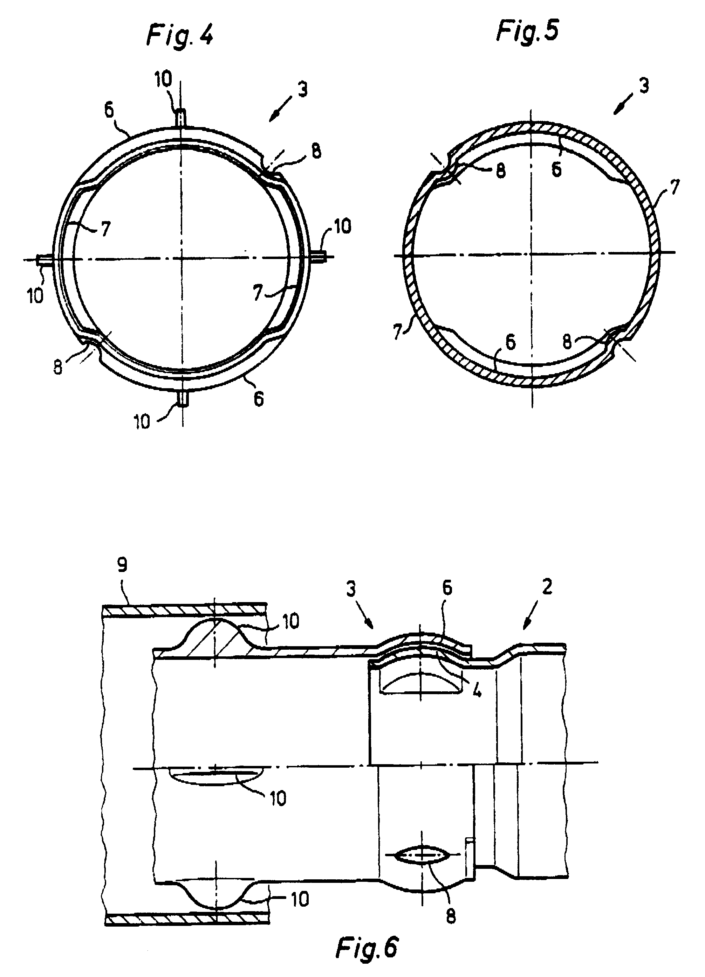

In ähnlicher Weise umfaßt gemäß Figur 4 und 5 das Muffenende 3 zwei symmetrisch angeordnete sphärisch gekrümmte Innenflächenabschnitte 6, die über zwei dazwischenliegende, bis zum Rand verlaufende radiale Erweiterungen 7 miteinander verbunden sind.

Bei der Monatage wird ein Einsteckende 2 derart gegen das zugehörige Muffenende des benachbarten Rohrabschnitt ausgerichtet, daß seine sphärischen Außenflächenabschnitte 4 durch die Erweiterungen 7 hindurchtreten. Anschließend werden die beiden Rohrabschnitte gegeneinander verdreht. Dabei verschieben sich dann die sphärischen Außenflächenabschnitte 4 des Einsteckendes 2 vor die sphärischen Innenflächenabschnitte 6 des Kupplungsendes 3. Diese Position ist aus Figur 6 ersichtlich. Die beiden Rohrabschnitte sind derart axial gegeneinander verriegelt, daß sie Zug- und Druckkräfte übertragen können. Sie können also am Brenner oder dessen Halterung aufgehängt und als komplette Baugrauppe montiert und demontiert werden. Sie sind dementsprechend einfach zu handhaben und zu warten. Ferner können sie zur Kompensation thermischer Dehnungen Kippbewegungen relativ zueinander durchführen. Einsteckende 2 und Muffenende 3 besitzen fortlaufende rohrförmige Profile, so daß sich zwischen ihnen lediglich ein axialer Spalt bilden kann, der keinen wesentlichen vorzeitigen Austritt der Flammengase zuläßt.

Aus Figur 4 und 5 ergibt sich, daß das Muffenende zwei nach innen vorspringende Anschläge 8 aufweist, die die Drehbewegung des Einsteckendes innerhalb des Muffenendes in einer Richtung begrenzen und damit für eine korrekte Verriegelung der Kupplung sorgen.

In Figur 6 ist schematisch angedeutet, wie die Rohrabschnitte 1 innerhalb eines Mantelrohres 9 zentriert sind. Jeder Rohrabschnitt trägt hierzu radiale Ansätze 10, und zwar, wie aus Figur 2 und 4 ersichtlich, vier an der Anzahl, die ohne wesentliche Behinderung der Rauchgase eine zuverlässige Lagezuordnung zwischen Mantelrohr und Flammrohr ermöglichen.

## Patentansprüche

1. Mantelstrahlheizrohr mit einem Mantelrohr (9) und einem in diesem angeordneten Flammrohr, welches mindestens zwei Rohrabschnitte (1) aufweist, die an ihrem einen Ende als Muffenende (3) und an ihrem anderen Ende als Einsteckende (2) ausgebildet sind, wobei der eine Rohrabschnitt mit seinem Einsteckende in das Muffenende des benachbarten Rohrabschnitts eingesteckt ist,
dadurch gekennzeichnet,
daß die Rohrabschnitte (1) bajonettverschlußartig miteinander verriegelt sind, wobei das Muffenende (3) mindestens zwei im wesentlichen sphärisch gekrümmte Innenflächenabschnitte (6) mit in Umfangsrichtung dazwischenliegenden, bis zum Rand verlaufenden radialen Erweiterungen (7) und das Einsteckende (2) mindestens zwei im wesentlichen sphärisch gekrümmte Außenflächenabschnitte (4) mit in Umfangsrichtung dazwischenliegenden, bis zum Rand verlaufenden radialen Verengungen (5) aufweist und wobei die sphärisch gekrümmten Außenflächenabschnitte des Einsteckendes komplementär zu den sphärisch gekrümmten Innenflächenabschnitten des Muffenendes sind und durch dessen Erweiterung im benachbarten Rohrabschnitt axial hindurchpassen.

2. Mantelstrahlheizrohr nach Anspruch 1,
dadurch gekennzeichnet,
daß die Rohrabschnitte (1) aus Keramik, insbesondere aus dünnwandigem Siliziumkarbid bestehen.

3. Mantelstrahlheizrohr nach Anspruch 1 oder 2,
dadurch gekennzeichnet,
daß die Innen- und Außenflächenabschnitte (4; 6) symmetrisch über den jeweiligen Umfang verteilt sind.

4. Mantelstrahlheizrohr nach einem der Ansprüche 1 bis 3,
gekennzeichnet durch mindestens einen im Muffenende (3) nach innen vorspringenden Anschlag (8), der einen zugehörigen, nach innen vorspringenden Innenflächenabschnitt (6) in Umfangsrichtung einseitig begrenzt.

5. Mantelstrahlheizrohr nach einem der Ansprüche 1 bis 4,
dadurch gekennzeichnet, daß die Rohrabschnitte (1) jeweils mindestens zwei äußere radiale Ansätze (10) zum Zentrieren im Mantelrohr (9) aufweisen.

## Claims

1. A radiant tube with a jacket (9) and a flame tube arranged therein which features at least two tube sections (1) designed at one end in the shape of a female connection (3) and at the other end in the shape of a male connection (2), the male connection of one tube section being inserted in the female connection of the adjacent tube section,
characterised in that
the tube sections (1) are locked together with a bayonet coupling, the female connection (3) having at least two substantially spherically curved interior surface sections (6) with radial extensions (7) interposed in the circumferential direction and running to the edge and the male connection (2) having at least two substantially spherically curved exterior surface sections (4) with radial recesses (5) interposed in the circumferential direction and running to the edge and the spherically curved exterior surface sections of the male connection being complementary to the spherically curved interior surface sections of the female connection and passing axially through the extension of the female connection in the adjacent tube section.

2. A radiant tube according to claim 1,
characterised in that,
the tube sections (1) are made of ceramic material, in particular of thin-walled silicium carbide.

3. A radiant tube according to claim 1 or 2,
characterised in that,
the interior and exterior surface sections (4;6) are symmetrically distributed over the relevant circumference.

4. A radiant tube according to any one of claims 1 to 3,
characterised by at least one stop (8) protruding inwards in the female connection (3), said stop (8) unilaterally limiting in the circumferential direction a corresponding interior surface section (6) protruding inwards.

5. A radiant tube according to any one of claims 1 to 4,
characterised in that the tube sections (1) each feature at least two outer radial protrusions (10) for centring in the radiant tube (9).

## Revendications

1. Tube radiant avec enveloppe, composé d'une enveloppe (9) et d'un tube de flammes disposé dans l'enveloppe, présentant au moins deux sections de tube (1) conçues de l'une côté sous forme d'embout femelle (3) et de l'autre côté sous forme d'embout mâle (2), l'une section étant enfoncée avec son embout mâle dans la section voisine avec son embout femelle,
caractérisé par le fait
que les sections de tube (1) sont verrouillées à baïonnette l'une avec l'autre, l'embout femelle (3) présentant au moins deux sections de surface intérieure (6) principalement courbées sphériquement avec des élargissements radiaux (7) entreposés en direction circonférentielle et allant jusqu'au bord, et l'embout mâle (2) présentant au moins deux sections de surface extérieure (4) principalement courbées sphériquement avec des rétrécissements radiaux (5) entreposés en direction circonférentielle et allant jusqu'au bord, les sections de surface extérieure courbées sphériquement de l'embout mâle étant complémetaires aux sections de surface intérieure courbées sphériquement de l'embout femelle et passant axialement à travers l'élargissement du dernier dans la section de tube voisine.

2. Tube radiant avec enveloppe selon la revendication 1,
caractérisé par le fait
que les sections de tube (1) sont en matériau céramique, plus particulièrement en carbure de silicium de faible épaisseur.

3. Tube radiant avec enveloppe selon les revendications 1 ou 2,
caractérisé par le fait
que les sections de surfaces intérieure et extérieure (4; 6) sont réparties, de façon symétrique, sur la circonférence correspondante.

4. Tube radiant avec enveloppe selon les revendications 1 à 3,
caractérisé par
au moins un arrêt (8) saillant vers l'intérieur dans l'embout femelle, délimitant sur une côté en direction circonférentielle une section de surface intérieure (6) saillant vers l'intérieur lui appartenant.

5. Tube radiant avec enveloppe selon les revendications 1 à 4,
caractérisé par le fait
que les sections de tube (1) sont chacune munies d'au moins deux saillies radiales extérieures (10) pour le centrage dans l'enveloppe (9).
